# EUROPÄISCHE PATENTSCHRIFT

(11) **EP 3 803 108 B1**
(45) Veröffentlichungstag und Bekanntmachung des Hinweises auf die Patenterteilung: **14.01.2026**
(21) Anmeldenummer: 19729491.1
(22) Anmeldetag: 04.06.2019
(51) Int. Cl.: F03D 7/02

(54) **VERFAHREN ZUM STEUERN EINER WINDENERGIEANLAGE, WINDENERGIEANLAGE UND WINDPARK**
METHOD FOR CONTROLLING A WIND TURBINE, WIND TURBINE, AND WIND PARK
PROCÉDÉ POUR COMMANDER UNE ÉOLIENNE, ÉOLIENNE ET PARC ÉOLIEN

(30) Priorität: 08.06.2018 DE 102018113705
(43) Veröffentlichungstag der Anmeldung: 14.04.2021
(73) Patentinhaber: Wobben Properties GmbH, 26607 Aurich (DE)
(72) Erfinder: VON ASWEGE, Enno, 26629 Großefehn (DE)
(74) Vertreter: Eisenführ Speiser
(86) Internationale Anmeldenummer: PCT/EP2019/064511
(87) Internationale Veröffentlichungsnummer: WO 2019/234035

(56) Entgegenhaltungen:
- EP-A1- 2 876 300
- EP-A1- 2 963 283
- EP-A2- 2 746 576
- WO-A1-2016/138647

## Beschreibung

Die vorliegende Erfindung betrifft ein Verfahren zum Betreiben einer Windenergieanlage, eine zugehörige Windenergieanlage sowie einen Windpark. Die vorliegende Erfindung betrifft insbesondere ein Verfahren zum Betreiben einer Windenergieanlage, die einen Turm mit darauf wirkenden Turmlasten und einen aerodynamischen Rotor, der einen Rotorschub erzeugt, aufweist. Verfahren zum Betreiben einer Windenergieanlage weisen insbesondere einen Schritt des Reduzierens des Rotorschubes auf.

Bei der Steuerung beziehungsweise dem Betrieb von Windenergieanlagen ist bekannt, dass es Umwelt- und Betriebszustände der Windenergieanlage gibt, für die es sinnvoll ist, eines oder mehrere der Rotorblätter des aerodynamischen Rotors schnell zurückzufahren, das heißt, den Einstellwinkel der Rotorblätter unabhängig von der Drehzahlregelung zu erhöhen. Dies ist üblicherweise dann sinnvoll, wenn eine mechanische Beanspruchung, das heißt die Lasten, der Windenergieanlage reduziert werden sollen, bzw. eine Überbeanspruchung zu vermeiden ist. In derartigen Extremsituation, beispielsweise zur Vermeidung von Extremlasten auf den Rotorblättern, gibt es Schutzfunktionen, die Anweisungen zum Reduzieren des Rotorschubes, beispielsweise zum Zurückfahren bzw. Herauspitchen der Rotorblätter, erzeugen. Im Ergebnis wird durch das schnelle Zurückfahren der Rotorblätter der Rotorschub abrupt abnehmen. Es sind allerdings Situationen denkbar, in denen die resultierende Reduktion des Rotorschubes entweder zur Reduktion der Turmlasten nicht notwendig oder sogar kontraproduktiv sind. Einer dieser Fälle ist, wenn eine übertriebene Reduktion des Rotorschubes erfolgt, die situationsabhängig negative oder sogar gefährliche Konsequenzen haben kann.

Das Dokument EP 2 876 300 A1 beschreibt ein Windturbinensystem umfassend eine Windturbine, die eine Vielzahl von Flügeln und einen Turm umfasst, und ein Verarbeitungssubsystem, das so konfiguriert ist, dass es die Windturbine durch nichtlineares Ausklappen der Vielzahl von Flügeln in der Windturbine in Richtung einer Federposition mit einer Kipprate abschaltet, die auf der Grundlage einer Turmvorwärts-Rückwärts-Geschwindigkeit eines oberen Abschnitts des Turms während Schwingungen des Turms bestimmt wird.

Das Dokument EP 2 746 576 A2 beschreibt ein Verfahren und ein System zum Abschalten einer Windkraftanlage. Das Verfahren umfasst die Bestimmung von einer oder mehrerer Anstellwinkelpositionen für ein oder mehrere Rotorblätter der Windturbine, so dass eine Summe aus potentieller Energie und kinetischer Energie in der Windturbine minimiert wird. Das Verfahren umfasst ferner das Pitchen des einen oder der mehreren Rotorblätter von einer Betriebsposition zu den bestimmten Pitchpositionen.

Das Dokument WO 2016/138647 A1 beschreibt ein Verfahren zur Abschwächung von Lasten einer Windturbine als Reaktion auf einen oder mehrere Lastsensoren, die ausfallen. Das Verfahren umfasst den Betrieb der Windturbine in einem Standardbetriebsmodus durch eine Steuerung und die Überwachung der Lasten der Windturbine durch einen oder mehrere Lastsensoren. Der Standardbetriebsmodus umfasst einen vorbestimmten Schubsollwert und einen vorbestimmten Abschaltwindgeschwindigkeitssollwert. Als Reaktion auf die Erkennung von Ausfällen eines oder mehrerer Lastsensoren umfasst das Verfahren die Aktivierung eines Schutzbetriebsmodus in der Steuerung für eine vorbestimmte Zeitdauer. Genauer gesagt umfasst der Schutzbetriebsmodus die Reduzierung des vorbestimmten Schubsollwerts und des vorbestimmten Abschaltwindgeschwindigkeitssollwerts. Ein System zur Abschwächung von Lasten einer Windturbine wird ebenfalls beschrieben.

Das Dokument EP 2 963 283 A1 beschreibt ein Windturbinensystem. Das Windturbinensystem umfasst einen Turm, eine Vielzahl von Blättern, einen Rotor, der von dem Turm getragen wird und drehbar mit der Vielzahl von Blättern gekoppelt ist, eine Steuereinheit, die so programmiert ist, dass sie eine Nettoenergie des Turms zu einem oder mehreren zukünftigen Zeitpunkten vorhersagt, und wenn die vorhergesagte Nettoenergie innerhalb einer Auslegungsgrenze liegt, dann mit Basisbetriebssteuerungsmodellen für den normalen Betrieb des Windturbinensystems fortfährt, wenn die vorhergesagte Nettoenergie die Auslegungsgrenze überschreitet, dann ein nichtlineares Turmdämpfungsmodell verwendet, um Turmdämpfungsbefehle zu erzeugen, um die Turmdämpfung des Windturbinensystems zu steuern.

Vor diesem Hintergrund war es eine Aufgabe der vorliegenden Erfindung, einen verbesserten Betrieb einer Windenergieanlage zu ermöglichen.

Das Deutsche Patent- und Markenamt hat in der Prioritätsanmeldung zu vorliegender PCT-Anmeldung folgenden Stand der Technik recherchiert: US 2017 / 0 152 835 A1 und CN 106 194 580 A.

Erfindungsgemäß wird die Aufgabe durch ein Verfahren nach Anspruch 1 gelöst.

Demnach wird also dann, wenn beispielsweise durch eine Steuerung der Windenergieanlage klassischerweise eine Anweisung zum Reduzieren des Rotorschubes erzeugt wird, der Anweisung nicht in jedem Fall, sondern erst nach Prüfung Folge geleistet. Anders ausgedrückt, die eigentlich zum Schutz der Anlage ausgebildete Funktion, nämlich das Reduzieren des Rotorschubes, wird nicht unter allen Umständen umgesetzt, sondern ist an die Bedürfnisse der Windenergieanlage angepasst. Dies kann als eine Schutzfunktion vor der Schutzfunktion verstanden werden.

Insbesondere kann durch die erfindungsgemäße Berücksichtigung der Auswirkungen auf die Turmlasten ein Reduzieren des Rotorschubes dann unterbleiben, wenn beispielsweise ein Zurückfahren für die Turmlasten kontraproduktiv oder nicht notwendig ist.

In einer bevorzugten Ausführung umfasst das Berücksichtigen der Auswirkung des Reduzierens des Rotorschubes auf die Turmlasten, dass das Reduzieren des Rotorschubes unterbleibt oder abgeschwächt wird, wenn das Reduzieren des Rotorschubes eine Erhöhung der Turmlasten bewirkt.

Insbesondere in dem Fall, in dem der Turm nach vorne, das heißt in die Richtung des Windes bzw. die Richtung, aus der der Wind kommt, schwingt, erzeugt der Rotorschub eine Bremskraft auf die Schwingungsbewegung des Turms. Wenn der Rotorschub in dieser Situation reduziert wird, verringert sich die auf den Turm wirkende Bremskraft und demnach wird der Turm schneller und weiter nach vorne schwingen, als er bei nicht reduziertem Rotorschub geschwungen wäre. Dadurch wird insbesondere in diesem Fall das Reduzieren des Rotorschubes zu einer Erhöhung der Turmlasten führen. Indem erfindungsgemäß die Situation erkannt und ein Reduzieren des Rotorschubes beispielsweise unterbleibt, können Extremlasten, die auf den Turm wirken, reduziert werden.

Bei einer auftretenden Extremsituation wird von einer Schutzfunktion der Windenergieanlage beispielsweise eine Anweisung zum Reduzieren des Rotorschubes gestellt. Erfindungsgemäß können die Auswirkungen dieser Schutzfunktion abgeschwächt werden oder insgesamt unterbleiben, wenn die Reduktion des Rotorschubes aus anderen Gründen, insbesondere bei Berücksichtigung der Auswirkungen auf den Turm, nicht sinnvoll oder sogar gefährlich ist. Die vorliegende Erfindung ist also eine Art Schutzfunktion der Schutzfunktion, die verhindern kann, dass der Eingriff der ersten Schutzfunktion zu stark ausfällt. Die erste Schutzfunktion ist beispielsweise eine Lastkontrolle, die eingreift, wenn Lasten auf den Rotorblättern oder eine Änderungsgeschwindigkeit der Blattlasten zu groß ist. Besonders bevorzugt ist, wenn die Auswirkungen auf die Turmlasten erfindungsgemäß abhängig von der Leistung und/oder der Drehzahl berücksichtigt werden.

In einer bevorzugten Ausführung umfasst das Berücksichtigen der Auswirkung des Reduzierens des Rotorschubes auf die Turmlasten, dass das Reduzieren des Rotorschubes unterbleibt oder abgeschwächt wird, wenn das Reduzieren des Rotorschubes eine nicht erforderliche Reduktion der Lasten, die auf den Turm wirken, bewirkt.

Wird beispielsweise eine Anweisung zum Reduzieren des Rotorschubes erzeugt, wird gemäß dieser Ausführung festgestellt, ob das Reduzieren des Rotorschubes unter Berücksichtigung der Auswirkung auf die Turmlasten notwendig ist oder nicht. Wird nämlich ungeachtet des Reduzierens des Rotorschubes keine extremen Belastungen auf den Turm auftreten, so liegt unter Betrachtung der Lasten keine Notwendigkeit für eine Reduktion vor. Würde dennoch der Rotorschub reduziert, kann dies zu einer unnötigen Ertragseinbuße führen. Indem gemäß dieser Ausführung in diesem Fall das Reduzieren des Rotorschubes unterbleibt, kann die Ertragsausbeute der Windenergieanlage optimiert werden.

In einer bevorzugten Ausführung umfasst das Verfahren ferner einen Schritt des Bestimmens der Turmlasten, wobei das Berücksichtigen der Auswirkung des Reduzierens des Rotorschubes auf die Turmlasten einen Vergleich einer Änderung der Turmlasten mit einem Schwellwert aufweist.

Das Bestimmen der Änderung der Turmlasten erfolgt vorzugsweise durch direktes oder indirektes Messen. Verschiedene Formen der Bestimmung der Turmlasten sind der Fachperson bekannt. Änderungen können als Gradient der Turmlasten verstanden werden. Die Richtung der Änderung ist vorzugsweise für eine Rückwärts- bzw. Vorwärtsschwingung des Turmes indikativ. Damit kann durch eine Bestimmung der Turmlasten und/oder der Änderung der Turmlasten die aktuelle Position des Turmes bestimmt werden und in Abhängigkeit davon, ob die Änderung einen Schwellwert überschreitet oder nicht, kann der Rotorschub dann reduziert werden oder nicht.

In einer bevorzugten Ausführung umfasst das Berücksichtigen der Auswirkung des Reduzierens des Rotorschubes auf die Turmlasten ein Bestimmen einer Turmkopfgeschwindigkeit oder einer Gondelschwinggeschwindigkeit.

Somit ist in dieser Ausführung die Bestimmung der Turmlasten nicht durch eine direkte Messung, sondern indirekt über die Bestimmung der Turmkopfgeschwindigkeit implementiert. Aus der Turmkopfgeschwindigkeit lassen sich dann auf die herrschenden Lasten und insbesondere auf die Auswirkung des Reduzierens des Rotorschubes zurückschließen.

In einer bevorzugten Ausführung wird die Turmkopfgeschwindigkeit anhand einer Beschleunigung des Turmkopfes bestimmt. Demnach wird auch die Turmkopfgeschwindigkeit nicht direkt, sondern abgeleitet über die auf den Turmkopf wirkende Beschleunigung bestimmt. Dies ist besonders einfach, beispielsweise durch die Anbringung von Beschleunigungsmessern im Turmkopf oder im Bereich der Gondel möglich. Ein einfaches Messen von Beschleunigungen ist somit durch einfaches Umformulieren indikativ für die auf die Turmlasten zu erwartenden Auswirkungen.

Als Turmkopf wird vorliegend vorzugsweise die oberen 50 % der Höhe des Turmes der Windenergieanlage verstanden. Besonders bevorzugt bezieht sich der Turmkopf auf die oberen 20 % und insbesondere auf die oberen 10 % des Turmes. Insbesondere werden im Rahmen dieser Offenbarung in dem Kontext Last/Laständerungsgeschwindigkeit, Gondel/Turmkopfgeschwindigkeit hauptsächlich Bewegungen des Turmkopfes in Längsrichtung senkrecht zu einer Höhenrichtung des Turmes betrachtet. Ganz besonders sind die Längsbewegungen, die parallel zu der Windrichtung verlaufen, von Relevanz.

In einer bevorzugten Ausführung unterbleibt das Reduzieren des Rotorschubes, solange die Turmkopfgeschwindigkeit in Windrichtung einen vorbestimmten Schwellwert unterschreitet.

In dieser Ausführung kann die besonders unvorteilhafte Situation vermieden werden, wenn nämlich die Turmkopfgeschwindigkeit eine Komponente in Windrichtung hat, sodass das Reduzieren des Rotorschubes die Turmdurchbiegung nach vorne verstärken würde. Der vorbestimmte Schwellwert kann auch negativ sein, sodass auch geringe Schwingungskomponenten in Richtung entgegen des Windes zu einem Reduzieren des Rotorschubes führen können. Allerdings bewirkt diese Ausführung insbesondere, dass eben genau die Situationen, in denen der Turm mit hoher Geschwindigkeit nach vorne schwingt, von einem Reduzieren des Rotorschubes ausgenommen sind.

In einer bevorzugten Ausführung umfasst das Reduzieren des Rotorschubes ein Erhöhen eines Pitchwinkels wenigstens eines Rotorblattes des aerodynamischen Rotors.

Ein Erhöhen des Pitchwinkels eines oder mehrerer Rotorblätter führt unmittelbar zu einer Reduktion des Rotorschubes, wie weithin bekannt ist. Die Rotorblätter können die gleiche Pitchwinkelerhöhung erfahren, oder die Rotorblätter können einzeln oder in Gruppen gesteuert werden. Zusätzlich oder alternativ kann auch eine Formveränderung des oder der Rotorblätter, beispielsweise von dynamischen Oberflächenformen oder von Anbauteilen wie Klappen, gesteuert werden, um eine Reduktion des Rotorschubes zu erreichen. Auch andere geeignete Steuerungen, die im Ergebnis zu einer Reduktion des Rotorschubes führen, sind auf gleiche Weise einsetzbar.

In einer bevorzugten Ausführung umfasst das Reduzieren des Rotorschubes ein Anheben eines Mindestpitchwinkels.

Es ist bekannt, dass für den Mindestpitchwinkel eine sogenannte *αₘᵢₙ-* Regelung einen mindestens an dem Blatt anliegenden Pitchwinkel kontrolliert. Damit wird gewährleistet, dass der oder die Pitchwinkel des oder der Rotorblätter nicht unterhalb eines bestimmten Pitchwinkels eingestellt werden, der beispielsweise zu übermäßig großen Lasten auf den Rotor führt. Das Reduzieren des Rotorschubes kann demnach unkompliziert und mit wenig Aufwand in die bestehende *αₘᵢₙ-* Regelung integriert, bzw. darüber überlagert werden. Diese Ausführung zeichnet sich demnach durch einen geringen Mehraufwand für die Einrichtung und Steuerung aus.

In einer bevorzugten Ausführung umfasst das Reduzieren des Rotorschubes ein Absenken der Solldrehzahl. Das Absenken der Solldrehzahl kann alternativ oder zusätzlich zu einem Anheben des Mindestpitchwinkels erfolgen. Auch weitere Eingriffe in die Steuerung, die im Ergebnis ein Reduzieren des Rotorschubes haben, sind vorstellbar.

In einer bevorzugten Ausführung erfolgt das Reduzieren des Rotorschubes unter Berücksichtigung der Auswirkung des Reduzierens des Rotorschubes auf die Turmlasten dadurch, dass eine maximal zulässige Änderung eines Pitchwinkels wenigstens eines der Rotorblätter des aerodynamischen Rotors als komplexe Funktion der Turmlasten, insbesondere als Funktion einer Turmkopfgeschwindigkeit, implementiert ist.

Durch die Implementierung gemäß dieser Ausführung wird eine besonders präzise Steuerung ermöglicht. Obgleich diese Implementierung komplexer als der Vergleich mit einem Schwellwert ist, kann dadurch eine deutlich leistungsfähigere Regelung erhalten werden. Insbesondere kann das Reduzieren des Rotorschubes dann besonderes präzise auf Umgebungsbedingungen abgestimmt sein.

Je höher die Änderung des Pitchwinkels ist, desto größer ist die Wirkung auf das Reduzieren, bzw. Erhöhen des Rotorschubes. Somit kann in dieser Ausführung für eine bestimmte Turmkopfgeschwindigkeit eine maximal zulässige Änderung bestimmt werden, beispielsweise kann die Änderung des Pitchwinkels nicht eingeschränkt sein, wenn der Turmkopf nach hinten schwingt, jedoch signifikant eingeschränkt sein, in einem Fall, in dem sich der Turmkopf nach vorne bewegt. Hierbei tritt sowohl die Änderungsgeschwindigkeit als auch der Betrag der Änderung in Erscheinung. Nur bei hinreichender absoluter Änderung des Pitchwinkels sind überhaupt signifikante Auswirkungen auf die Lasten zu erwarten. Die Auswirkungen auf die Lasten werden dabei umso größer, je rascher die Änderung, d.h. je größer die Änderungsgeschwindigkeit, erfolgt.

Gemäß einem weiteren Aspekt wird die Aufgabe erfindungsgemäß durch eine Windenergieanlage, die einen Turm mit darauf wirkenden Turmlasten, einen aerodynamischen Rotor, der einen Rotorschub erzeugt, und eine Steuerung aufweist, gelöst. Die Steuerung ist dazu eingerichtet, die Windenergieanlage nach wenigstens einer Ausführung des erfindungsgemäßen Verfahrens zu betreiben.

Die Windenergieanlage kann gegenüber bekannten Windenergieanlagen beispielsweise mit niedrigeren zu erwartenden Lasten auf den Turm ausgelegt werden, da das Steuerungsverfahren dazu ausgebildet ist, Extremlasten beispielsweise bei einem nach vorne schwingenden Turm zu vermeiden. Darüber hinaus ermöglicht die erfindungsgemäße Windenergieanlage eine optimale Energieausbeute, da ein unnötiges Reduzieren des Rotorschubes und die damit verbundenen Leistungseinbußen vermieden werden. Die erfindungsgemäße Windenergieanlage lässt sich samt damit verbundenen Vorteilen mit sämtlichen der als bevorzugt beschriebenen Ausführungen des erfindungsgemäßen Verfahrens kombinieren.

Gemäß einem weiteren Aspekt wird die Aufgabe erfindungsgemäß durch einen Windpark mit mehreren erfindungsgemäßen Windenergieanlagen gelöst.

Weitere Vorteile und beispielhafte Ausführungen werden nachfolgend mit Verweis auf die beigefügten Figuren beschrieben. Hierbei zeigen:
- Fig. 1: schematisch und exemplarisch eine Windenergieanlage und
- Fig. 2: schematisch und exemplarisch den Ablauf eines erfindungsgemäßen Verfahrens zum Betreiben einer Windenergieanlage.

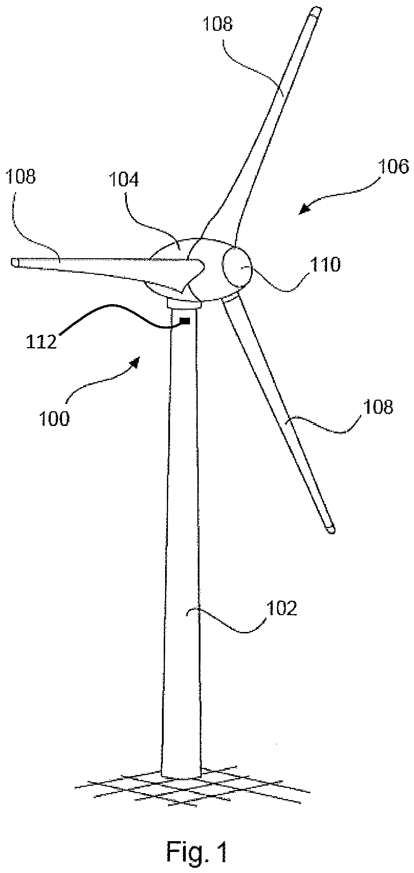

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Durch den von dem aerodynamischen Rotor 106 erzeugten Schub wird insbesondere der Turm 102 in Schwingung versetzt. Eine Hauptbewegungsrichtung der Turmschwingung ist in Richtung des eintreffenden Windes bzw. der Azimuteinstellung der Gondel 104. Durch die Schwingung des Turmes 102 wirken auf den Turm 102 nicht zu vernachlässigende Lasten. Diese Lasten sind für die Auslegung des Turms 102 von entscheidender Bedeutung. Die Vorliegende Erfindung ermöglicht nun, dass die Windenergieanlage derart gesteuert werden kann, dass Extremlasten auf dem Turm 102 verringert werden, wodurch der Turm 102 leichter und damit kostengünstiger ausgelegt werden kann.

In diesem Beispiel ist zur Abschätzung der auf den Turm 102 wirkenden Lasten, ein Beschleunigungssensor 112 in einem oberen Bereich des Turms 102, genannt Turmkopf, angeordnet. Alternativ könnte der Beschleunigungssensor 112 auch in anderen Bereichen des Turms 102 oder auch im Bereich der Gondel 104 angeordnet sein, solange die Beschleunigungsmessungen Rückschlüsse auf die Beschleunigung, die auf den Turm 102 wirken, ermöglichen. Auch können mehrere Beschleunigungssensoren 112 vorgesehen sein.

Die Bestimmung der Turmlasten mittels des Beschleunigungssensors 112 erfolgt dadurch, dass die gemessenen Beschleunigungswerte die Geschwindigkeit des Turmkopfes, damit eine Position innerhalb der periodischen Schwingung und ausgehend davon die auf den Turm 102 wirkenden Lasten bestimmt bzw. abgeschätzt werden.

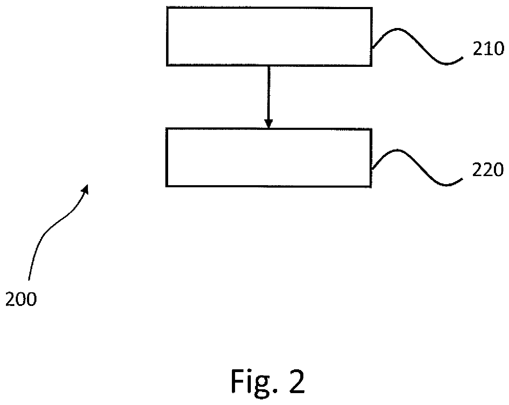

Das erfindungsgemäße Verfahren 200 zum Betreiben einer Windenergieanlage 100 wird im Folgenden mit Verweis auf Figur 2 beschrieben. Das Verfahren 200 umfasst einen Schritt 210 des Berücksichtigens der Auswirkung des Reduzierens des Rotorschubes auf die Turmlasten und darauf basierend einen Schritt 220 des Reduzierens des Rotorschubes.

Dem Verfahren liegt im Kern die Erkenntnis zugrunde, dass ein Reduzieren des Rotorschubes, wie er üblicherweise bei bestimmten Zuständen in Steuerungen von Windenergieanlagen implementiert ist, bei einigen Situationen entweder kontraproduktiv oder nicht notwendig ist. Unabhängig von der Drehzahlregelung existieren nämlich Umweltzustände, bzw. Zustände der Windenergieanlage, in denen es sinnvoll ist, den Rotorschub zu reduzieren, beispielsweise indem die Rotorblätter 108 schnell zurückgefahren werden, das heißt der Pitchwinkel der Rotorblätter 108 stark bzw. schnell erhöht wird. Dies ist beispielsweise dann der Fall, wenn die mechanische Beanspruchung der Windenergieanlage, das heißt die Lasten, reduziert werden, bzw. eine Überbeanspruchung verhindert werden soll. Mögliche Implementierungen zur Reduzierung des Rotorschubes umfassen eine Anhebung eines Mindestblattwinkels für eines oder mehrere der Rotorblätter oder auch eine Reduktion der Solldrehzahl der Windenergieanlage. Dies führt dazu, dass der Rotorschub abrupt abnimmt, was nicht in jedem Fall erwünscht ist. Die vorliegende Offenbarung dient dann dazu, dass die möglicherweise von anderen Schutzfunktionen geforderte Reduktion des Rotorschubes abgeschwächt wird oder unterbleibt, also nicht über ein für alle Komponenten der Windenergieanlage gesundes Maß hinausschießt.

Wenn beispielsweise die Rotorblätter schnell zurückgefahren werden, das heißt sich der Pitchwinkel der Rotorblätter schnell erhöht, und der Turm 102 gleichzeitig nach vorne, das heißt im Wesentlichen in den Wind, schwingt führt die Abnahme des Schubes des Rotors 106 dazu, dass der Turm 102 noch schneller und vor allem weiter nach vorne schwingt. Hierbei kann es zu Extrembelastungen des Turmes 102 kommen. In einer anderen Situation werden die Rotorblätter 108 aber auch schnell zurückgefahren, um dem Turm 102 selbst vor einer Überlast zu schützen. Hierbei soll verhindert werden, dass der Turm 102 durch den Schub des Rotors 106 zu weit nach hinten, das heißt in Richtung des Windes, gedrückt wird. Die Gefahr der Überlast auf den Turm 102 besteht aber dann nicht, wenn der Turm 102 gerade nach vorne, das heißt in den Wind schwingt. Würde in diesem Fall der Rotorschub des Rotors 106 reduziert werden, würde gegebenenfalls unnötig Ertrag verloren gehen.

Aus diesem Grund wird zunächst in dem Schritt 210 geprüft, ob die Auswirkung des Reduzierens des Rotorschubes sinnvoll und notwendig ist. Nur wenn dies erfüllt ist, wird das erfindungsgemäße Verfahren 200 in dem Schritt 220 den Rotorschub tatsächlich reduzieren, beispielsweise durch Erhöhung des Mindestpitchwinkels der Rotorblätter 108 oder durch Reduktion der Solldrehzahl. Auch andere Möglichkeiten zur Reduktion des Rotorschubes sind natürlich möglich.

In diesem Beispiel wird das Berücksichtigen in Schritt 210 dadurch implementiert, dass eine geeignete Steuereinheit der Windenergieanlage vorzugsweise prüft, dass die Reduktion des Schubes des Rotors 106 weder kontraproduktiv noch unnötig ist. Hierzu dienen die Beschleunigungssensoren 112, mittels derer in diesem Beispiel die Geschwindigkeit des Turmkopfes bzw. der Gondel 104 berechnet bzw. abgeschätzt werden. Die Geschwindigkeit kann über die in diesem Beispiel gemessene Beschleunigung des Turmkopfes bestimmt werden. Alternativ zu der Bestimmung mittels des Beschleunigungssensors 112 kann auch eine Lastmessung zum Einsatz kommen, um auf die Turmkopfgeschwindigkeit zu kommen. In weiteren Beispielen kann auch eine Änderung der bestimmten Last selbst zur Beurteilung der Auswirkung des Reduzierens des Rotorschubes herangezogen werden.

In einem einfachsten Beispiel dienen Schwellwerte, beispielsweise der Turmkopfgeschwindigkeit, der Gondelschwinggeschwindigkeit oder auch der Änderung der Lasten zur Beurteilung, ob der Rotorschub zu reduzieren ist oder nicht. In diesem Fall würde der Rotorschub also nur reduziert werden, wenn die Schwellwerte erreicht sind. In alternativen Ausführungen kann aber auch ein Höchstwert für die Pitchgeschwindigkeit, alternativ sämtliche anderen Steuerungen zur Verringerung des Rotorschubes, als Funktion der für die Auswirkung indikativen Parameter, beispielsweise der Turmkopfgeschwindigkeit, der Gondelschwinggeschwindigkeit oder auch der Laständerungsgeschwindigkeit gebildet werden. Auch Abwandlungen und Kombinationen aus Schwellwerten und komplexen Funktionen, beispielsweise gestaffelte Schwellwerte, sind denkbar. Ebenso kann mehr als eine Eingangsgröße, beispielsweise mehrere gemessene oder geschätzte Geschwindigkeiten, herangezogen werden.

## Patentansprüche

1. Verfahren zum Betreiben einer Windenergieanlage, wobei die Windenergieanlage (100) einen Turm (102) mit darauf wirkenden Turmlasten und einen aerodynamischen Rotor (106), der einen Rotorschub erzeugt, aufweist, wobei das Verfahren (200) einen Schritt des Reduzierens (220) des Rotorschubes aufweist, **dadurch gekennzeichnet, dass** das Reduzieren des Rotorschubes nicht in jedem Fall, sondern erst nach Prüfung (210) der Auswirkung des Reduzierens des Rotorschubes auf die Turmlasten erfolgt, wobei die Prüfung (210) der Auswirkung des Reduzierens des Rotorschubes auf die Turmlasten nach einem Schritt des Erzeugens einer Anweisung des Ausführens des Schrittes des Reduzierens (220) des Rotorschubs erfolgt.

2. Verfahren nach Anspruch 1, wobei die Prüfung (210) der Auswirkung des Reduzierens des Rotorschubes auf die Turmlasten umfasst, dass das Reduzieren (220) des Rotorschubes unterbleibt oder abgeschwächt wird, wenn das Reduzieren des Rotorschubes eine Erhöhung der Turmlasten bewirkt, insbesondere Extremlasten des Turmes verursacht.

3. Verfahren nach einem der vorstehenden Ansprüche, wobei die Prüfung (210) der Auswirkung des Reduzierens des Rotorschubes auf die Turmlasten umfasst, dass das Reduzieren (220) des Rotorschubes unterbleibt oder abgeschwächt wird, wenn das Reduzieren des Rotorschubes eine nicht erforderliche Reduktion der Lasten, die auf den Turm wirken, bewirkt.

4. Verfahren nach einem der vorstehenden Ansprüche, das weiter einen Schritt des Bestimmens der Turmlasten umfasst, wobei die Prüfung (210) der Auswirkung des Reduzierens des Rotorschubes auf die Turmlasten einen Vergleich einer Änderung der Turmlasten mit einem Schwellwert aufweist.

5. Verfahren nach einem der vorstehenden Ansprüche, wobei die Prüfung (210) der Auswirkung des Reduzierens des Rotorschubes auf die Turmlasten ein Bestimmen einer Turmkopfgeschwindigkeit oder einer Gondelschwinggeschwindigkeit umfasst.

6. Verfahren nach Anspruch 5, wobei die Turmkopfgeschwindigkeit und/oder die Gondelschwinggeschwindigkeit anhand einer Beschleunigung des Turmkopfes bzw. einer Gondel der Windenergieanlage bestimmt wird.

7. Verfahren nach Anspruch 5 oder 6, wobei das Reduzieren (220) des Rotorschubes unterbleibt, solange die Turmkopfgeschwindigkeit in Windrichtung einen vorbestimmten Schwellwert unterschreitet.

8. Verfahren nach einem der vorstehenden Ansprüche, wobei das Reduzieren (220) des Rotorschubes ein Erhöhen eines Pitchwinkels wenigstens eines Rotorblattes (108) des aerodynamischen Rotors (106) umfasst.

9. Verfahren nach Anspruch 8, wobei das Reduzieren (220) des Rotorschubes ein Anheben eines Mindestpitchwinkels umfasst.

10. Verfahren nach einem der vorstehenden Ansprüche, wobei das Reduzieren (220) des Rotorschubes ein Absenken der Solldrehzahl umfasst.

11. Verfahren nach einem der vorstehenden Ansprüche, wobei das Reduzieren (220) des Rotorschubes unter Berücksichtigung der Auswirkung des Reduzierens des Rotorschubes auf die Turmlasten dadurch erfolgt, dass eine maximal zulässige Änderung eines Pitchwinkels wenigstens eines der Rotorblätter (108) des aerodynamischen Rotors (106) als komplexe Funktion der Turmlasten, insbesondere als Funktion einer Turmkopfgeschwindigkeit, implementiert ist.

12. Windenergieanlage (100), die einen Turm (102) mit darauf wirkenden Turmlasten, einen aerodynamischen Rotor (106), der einen Rotorschub erzeugt, und eine Steuerung aufweist, **dadurch gekennzeichnet, dass** die Steuerung dazu eingerichtet ist, die Windenergieanlage (100) nach einem der Verfahren gemäß wenigstens einem der Ansprüche 1 bis 11 zu betreiben.

13. Windpark mit mehreren Windenergieanlagen (100) nach Anspruch 12.

## Claims

1. A method for operating a wind turbine, wherein the wind turbine (100) has a tower (102) with tower loads acting thereon and an aerodynamic rotor (106) which generates a rotor thrust, wherein the method (200) has a step of reducing (220) the rotor thrust, **characterized in that** the reduction of the rotor thrust is not performed in any case but only after checking (210) the effect of the reduction of the rotor thrust on the tower loads, wherein the checking (210) the effect of the reduction of the rotor thrust on the tower loads occurs after a step of issuing an instruction to perform the step of reducing (220) the rotor thrust.

2. The method as claimed in claim 1, wherein the checking (210) of the effect of the reduction of the rotor thrust on the tower loads comprises the suppression or attenuation of the reduction (220) of rotor thrust if the reduction of rotor thrust leads to an increase in tower loads, in particular causes extreme loads on the tower.

3. The method as claimed in one of the preceding claims, wherein the checking (210) of the effect of the reduction of the rotor thrust on the tower loads comprises the suppression or attenuation of the reduction (220) of rotor thrust if the reduction of rotor thrust leads to an unnecessary reduction in loads acting on the tower.

4. The method as claimed in one of the preceding claims, furthermore comprising a step of determining the tower loads, wherein the checking (210) of the effect of the reduction of the rotor thrust on the tower loads comprises a comparison of a change in tower loads with a threshold value.

5. The method as claimed in one of the preceding claims, wherein the checking (210) of the effect of the reduction of the rotor thrust on the tower loads comprises a determination of a tower head speed or a gondola oscillation speed.

6. The method as claimed in claim 5, wherein the tower head speed and/or the gondola oscillation speed is determined from an acceleration of the tower head or gondola of the wind turbine.

7. The method as claimed in claim 5 or 6, wherein the reduction (220) of the rotor thrust is suppressed as long as the tower head speed in the wind direction lies below a predefined threshold value.

8. The method as claimed in one of the preceding claims, wherein the reduction (220) of rotor thrust comprises an increase in a pitch angle of at least one rotor blade (108) of the aerodynamic rotor (106).

9. The method as claimed in claim 8, wherein the reduction (220) of rotor thrust comprises an increase in a minimum pitch angle.

10. The method as claimed in one of the preceding claims, wherein the reduction (220) of rotor thrust comprises a lowering of the nominal rotation speed.

11. The method as claimed in one of the preceding claims, wherein the reduction (220) of rotor thrust is performed while considering the effect of the reduction of rotor thrust on the tower loads, in that a maximum permitted change of pitch angle of at least one of the rotor blades (108) of the aerodynamic rotor (106) is implemented as a complex function of the tower loads, in particular as a function of a tower head speed.

12. A wind turbine (100) having a tower (102) with tower loads acting thereon, an aerodynamic rotor (106) which generates a rotor thrust, and a controller, **characterized in that** the wind turbine (100) is operated using the method as claimed in at least one of claims 1 to 11.

13. A wind park with a plurality of wind turbines (100) as claimed in claim 12.

## Revendications

1. Procédé de fonctionnement d'une éolienne, dans lequel l'éolienne (100) présente une tour (102) avec des charges de tour agissant sur celle-ci et un rotor aérodynamique (106), qui génère une poussée de rotor, dans lequel le procédé (200) présente une étape de réduction (220) de la poussée de rotor, **caractérisé en ce que** la réduction de la poussée de rotor ne s'effectue pas systématiquement, mais seulement après contrôle (210) de l'effet de la réduction de la poussée de rotor sur les charges de tour, dans lequel le contrôle (210) de l'effet de la réduction de la poussée de rotor sur les charges de tour s'effectue après une étape de génération d'une instruction d'exécution de l'étape de réduction (220) de la poussée de rotor.

2. Procédé selon la revendication 1, dans lequel le contrôle (210) de l'effet de la réduction de la poussée de rotor sur les charges de tour implique que la réduction (220) de la poussée de rotor soit omise ou atténuée lorsque la réduction de la poussée de rotor entraîne une augmentation des charges de tour, en particulier provoque des charges extrêmes de la tour.

3. Procédé selon l'une quelconque des revendications précédentes, dans lequel le contrôle (210) de l'effet de la réduction de la poussée de rotor sur les charges de tour implique que la réduction (220) de la poussée de rotor soit omise ou atténuée lorsque la réduction de la poussée de rotor entraîne une diminution non nécessaire des charges qui agissent sur la tour.

4. Procédé selon l'une quelconque des revendications précédentes, qui comprend en outre une étape de détermination des charges de tour, dans lequel le contrôle (210) de l'effet de la réduction de la poussée de rotor sur les charges de tour présente une comparaison d'une modification des charges de tour avec une valeur de seuil.

5. Procédé selon l'une quelconque des revendications précédentes, dans lequel le contrôle (210) de l'effet de la réduction de la poussée de rotor sur les charges de tour comprend une détermination d'une vitesse de tête de tour ou d'une vitesse d'oscillation de nacelle.

6. Procédé selon la revendication 5, dans lequel la vitesse de tête de tour et/ou la vitesse d'oscillation de nacelle est déterminée sur la base d'une accélération de la tête de tour ou d'une nacelle de l'éolienne.

7. Procédé selon la revendication 5 ou 6, dans lequel la réduction (220) de la poussée de rotor est omise tant que la vitesse de tête de tour dans la direction du vent est inférieure à une valeur de seuil prédéterminée.

8. Procédé selon l'une quelconque des revendications précédentes, dans lequel la réduction (220) de la poussée de rotor comprend une augmentation d'un angle de calage d'au moins une pale de rotor (108) du rotor aérodynamique (106).

9. Procédé selon la revendication 8, dans lequel la réduction (220) de la poussée de rotor comprend une élévation d'un angle de calage minimal.

10. Procédé selon l'une quelconque des revendications précédentes, dans lequel la réduction (220) de la poussée de rotor comprend une diminution de la vitesse de rotation de consigne.

11. Procédé selon l'une quelconque des revendications précédentes, dans lequel la réduction (220) de la poussée de rotor, en tenant compte de l'effet de la réduction de la poussée de rotor sur les charges de tour, s'effectue par le fait qu'une modification maximale admissible d'un angle de calage d'au moins l'une des pales (108) de rotor du rotor aérodynamique (106) en tant que fonction complexe des charges de tour, notamment en tant que fonction d'une vitesse de tête de tour, est mise en œuvre.

12. Éolienne (100), qui présente une tour (102) avec des charges de tour agissant sur celle-ci, un rotor aérodynamique (106) qui génère une poussée de rotor, et une commande, **caractérisée en ce que** la commande est conçue pour faire fonctionner l'éolienne (100) selon l'un des procédés selon au moins l'une des revendications 1 à 11.

13. Parc éolien avec plusieurs éoliennes (100) selon la revendication 12.
